# EUROPEAN PATENT APPLICATION

(11) **EP 4 595 780 A1**
(43) Date of publication of application: **06.08.2025**
(21) Application number: 24425008.0
(22) Date of filing: 05.02.2024
(51) Int. Cl.: A23N 7/02

(54) **METHODS AND SYSTEMS FOR PEELING PRODUCE**

(71) Applicant: ABL S.r.l., 41032 Cavezzo (MO) (IT)
(72) Inventor: SETTI, Fabio, 41032 Cavezzo MO (IT); POGGIOLI, Silvia, 41032 Cavezzo MO (IT); RIGHI, Enrico, 41032 Cavezzo MO (IT); ASCARI, Carlo, 41032 Cavezzo MO (IT); SGARBI, Giuliano, 41032 Cavezzo MO (IT); FABBRI, Matteo, 41032 Cavezzo MO (IT); AGAZZANI, Andrea, 41032 Cavezzo MO (IT)
(74) Representative: Jones Day

(57) **Abstract**

Systems and methods are provided for peeling a produce item. An example system includes a rotating drive configured to removably couple to a produce item and to rotate the produce item, and a blade configured to peel the produce item while the produce item is rotated. A grabbing mechanism may be configured to secure a produce item and to position the produce item within the coupling area of the rotating drive. The grabbing mechanism may include an arm that is configured to rotate away from the second section of the produce item. Furthermore, a removable blade guard may be used control the depth at which the blade penetrates the produce item.

## Description

### BACKGROUND

Items of produce, such as fruits and vegetables, often grow in configurations that substantially differ from how they are stored, transported, sold, or consumed. For example, in some instances it may be desirable to peel produce (e.g., mangos, kiwis, lemons, limes, apples, oranges, pineapples) by removing an outer skin during a produce processing phase. The peeled produce item, or portions thereof, may then be further processed or provided to consumers for use and consumption. For instance, a consumer (e.g., grocery shopper) or food-provider (e.g., restaurant) may prefer to purchase pre-peeled produce, rather than purchase produce in a more raw form to peel themselves.

### SUMMARY

Systems and methods are provided for safely peeling produce (e.g., mangos, kiwi, lemons, limes, apples, oranges, pineapples). In many situations it may be desirable to provide peeled produce items to consumers that have been peeled using automatic processes and machinery, which may reduce the processing time and provide more-uniform peeled produce products compared to hand-peeled items. In some aspects, the present disclosure allows for the outer peel of a produce item to be quickly removed using a process with reduced motion of the produce item and less human interaction. Additionally, techniques are also provided for controlled adjustment of the shape and depth at which the produce item is peeled. For instance, a blade guard and associated guard positioning device may allow a user to remove and replace a blade guard while maintaining the prior positioning of the blade guard before removal. Accordingly, the present disclosure can allow for the processing and sale of individually peeled produce items at scale.

In one aspect, the present disclosure provides a system for peeling produce. The system may include a rotating drive having a first member and second member, the first member and second member configured to removably couple to a produce item within a coupling area of the rotating drive and to rotate the produce item. The system may also include a blade configured to peel the produce item while the produce item is rotated by the rotating drive. Additionally, the system may include a grabbing mechanism configured to secure a produce item and to position the produce item within the coupling area of the rotating drive. The grabbing mechanism may include a first arm configured to contact the produce item from a first section and a second arm configured to contact the produce item from a second section. The second arm may be further configured to rotate away from the second section of the produce item.

The second arm may be configured to rotate away from the second end of the produce item when the produce item is removably coupled to the first member and the second member. The grabbing mechanism may be configured to move in a vertical direction in and out of the coupling area of the rotating drive. The grabbing mechanism may further include an actuator configured to rotate the second arm toward the second section of the produce item. The grabbing mechanism may be configured to move in one axial direction relative to the coupling area of the rotating drive. The grabbing mechanism may be configured to secure the produce item from a top section and a bottom section, and wherein the members of the rotating drive are configured to removably couple to a left section and a right section of the produce item.

The blade may be a conical blade. The system may further include a blade guard positioned adjacent to the blade, wherein the blade guard is configured to control the depth at which the blade penetrates the produce item. Furthermore, the system may further include a blade rod coupled to the blade and the blade guard, the blade rod configured to position the blade to controllably contact the produce item. Additionally, the system may further include a guard positioning device coupled to the blade rod and the blade guard, the guard positioning device configured to control the position of the blade guard relative to the blade. The guard positioning device may be configured such that the position of the blade guard relative to the blade may be maintained as the blade guard is removed and reattached to the guard positioning device. The blade guard may be configured to connect to the blade guard positioning device using a threaded bolt. The blade guard may be configured to be adjusted in a parallel direction to a cutting edge of the blade. The system may further include a feeder configured to move the produce item in a lateral direction, wherein the grabbing mechanism is configured to secure the produce item from the feeder.

In another aspect, the present disclosure provides a method of processing produce. The method may include securing a produce item using a grabbing mechanism having a first arm and a second arm, positioning the secured produce item within the coupling area of a rotating drive, coupling the produce item to a rotating drive having a first member and second member, releasing the produce item from the grabbing mechanism by rotating the second arm away from the produce item, rotating the produce item using the rotating drive, and peeling the produce item by contacting a blade to the produce item while the produce item is rotated by the rotating drive. The method may further include securing a second produce item using the grabbing mechanism while the produce item is being peeled by the blade. The grabbing mechanism may be configured to secure the second produce item by rotating the second arm toward the second produce item.

In yet another aspect, the present disclosure provides a system for processing produce. The system may include a blade configured to peel a produce item while the produce item is rotated and a blade guard positioned adjacent to the blade, wherein the blade guard may be configured to control the depth at which the blade penetrates the produce item. The system may also include a blade rod coupled to the blade and the blade guard. The blade rod may be configured to position the blade to controllably contact the produce item. The system may further include a guard positioning device coupled to the blade rod and the blade guard, the guard positioning device configured to control the position of the blade guard relative to the blade. The guard positioning device may be configured such that the position of the blade guard relative to the blade may be maintained as the blade guard is removed and reattached to the guard positioning device. Furthermore, the blade guard may be configured to connect to the blade guard positioning device using a threaded bolt. The blade guard may be configured to be adjusted in a parallel direction to a cutting edge of the blade.

In one aspect, the present disclosure provides a blade guard for use in produce processing system. The blade guard may include a rounded surface configured to contact a produce item and a connecting arm attached to the rounded surface and configured to removably attach to a guard positioning device. The connecting arm may include a first aperture configured to receive a first fastener and a second aperture configured to receive a second fastener.

The current subject matter will be better understood by reference to the following detailed description when considered in combination with the accompanying drawings which form part of the present specification.

### BRIEF DESCRIPTION OF DRAWINGS

FIG. 1A is a diagram depicting a front, perspective view of a system for processing produce.
FIG. 1B is a diagram depicting a back, perspective view of the system for processing produce of FIG. 1A.
FIG. 1C is a diagram depicting a front, sectional view of the system for processing produce of FIGs. 1A-1B.
FIG. 2A is a diagram depicting a cutout view of various internal subassemblies in a system for processing produce.
FIG. 2B is a diagram depicting a cutout view of various internal subassemblies of the system for processing produce of FIG. 2A, with various components having been hidden for clarity purposes.
FIG. 3A is a diagram depicting a perspective view of a loading subassembly (also referred to as a feeder subassembly herein) of a system for processing produce.
FIG. 3B is a diagram depicting a side view of a loading subassembly of the system for processing produce of FIG. 3A shown in an initial loading state.
FIG. 3C is a diagram depicting a side view of a loading subassembly of the system for processing produce of FIGs. 3A-3B shown in a subsequent loaded state.
FIG. 4A is a diagram depicting a perspective view of a positioning subassembly of a system for processing produce.
FIG. 4B is a diagram depicting a perspective view of a part of the positioning subassembly of FIG. 4A.
FIG. 4C is a diagram depicting a side view of the part of the positioning subassembly of FIGs. 4A-4B in a top, unclamped position.
FIG. 4D is a diagram depicting a side view of the part of the positioning subassembly of FIGs. 4A-4C in a top, clamped position, with a produce item having been secured.
FIG. 4E is a diagram depicting a side view of the part of the positioning subassembly of FIGs. 4A-4D in a bottom, clamped position, with a produce item having been secured and moved into a coupling area of a rotating drive.
FIG. 4F is a diagram depicting a side view of the part of the positioning subassembly of FIGs. 4A-4E in a bottom, unclamped position, with a produce item having been coupled to the rotating drive.
FIG. 4G is a diagram depicting a side view of the part of the positioning subassembly of FIGs. 4A-4F in a top, unclamped position, with a produce item having been coupled to the rotating drive.
FIG. 4H is a diagram depicting a side view of the part of the positioning subassembly of FIGs. 4A-4G in a top, clamped position, with a second produce item having been secured.
FIG. 5A is a diagram depicting a perspective view of part of a rotating drive subassembly of a system for processing produce. The rotating drive subassembly is shown coupling to a produce item in a coupling area.
FIG. 5B is a diagram depicting a perspective view of the part of a rotating drive subassembly of FIG. 5A. The rotating drive subassembly is shown rotating a coupled produce item in a coupling area.
FIG. 6A is a diagram depicting a perspective view of peeling subassembly of a system for processing produce.
FIG. 6B is a diagram depicting a front, perspective view of a part of the peeling subassembly of FIG. 6A.
FIG. 6C is a diagram depicting a rear, perspective view of the part of the peeling subassembly of FIG. 6B.
FIG. 7 is a diagram depicting a perspective view of a blade guard for use in a system for processing produce.
FIG. 8 is a flowchart depicting a method of processing produce:

### DETAILED DESCRIPTION

System and methods as described herein provide processing techniques that may allow for the swift peeling of a produce items by removing an outer section (i.e., skin) of the produce item. Additionally, among numerous other advantages, the techniques described herein allow for safe operation by distancing an operator from components that pose a safety hazard while also allowing for controlled adjustment of the peeling depth. Although many of the examples described herein are specifically tailored to fruits (e.g. mangos, kiwi, lemons, limes, oranges) that have specific shapes and sizes, it should be appreciated that many of the techniques described herein can be readily applied to other kinds of produce that would benefit from peeling or any of the other processing techniques described herein.

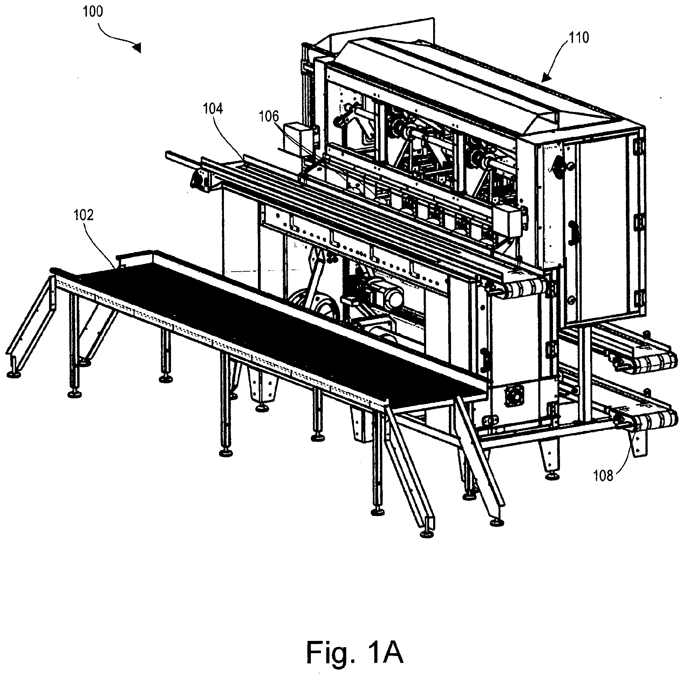

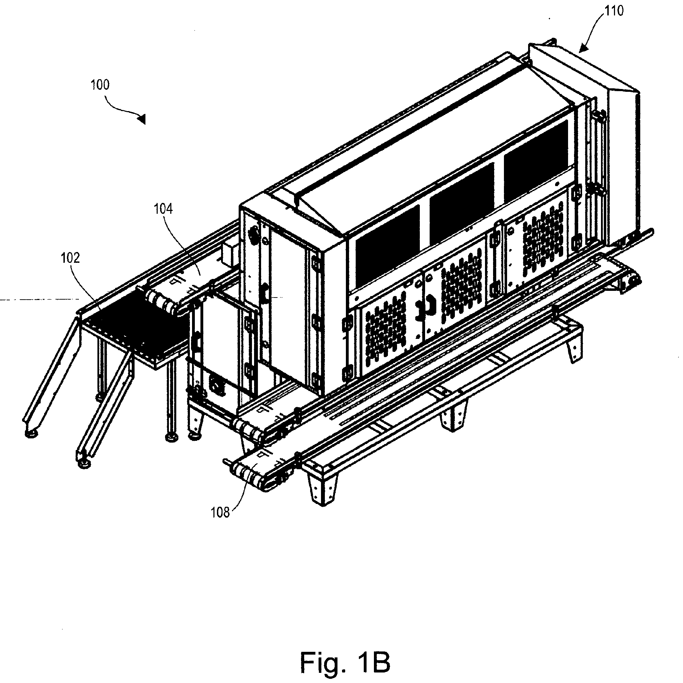

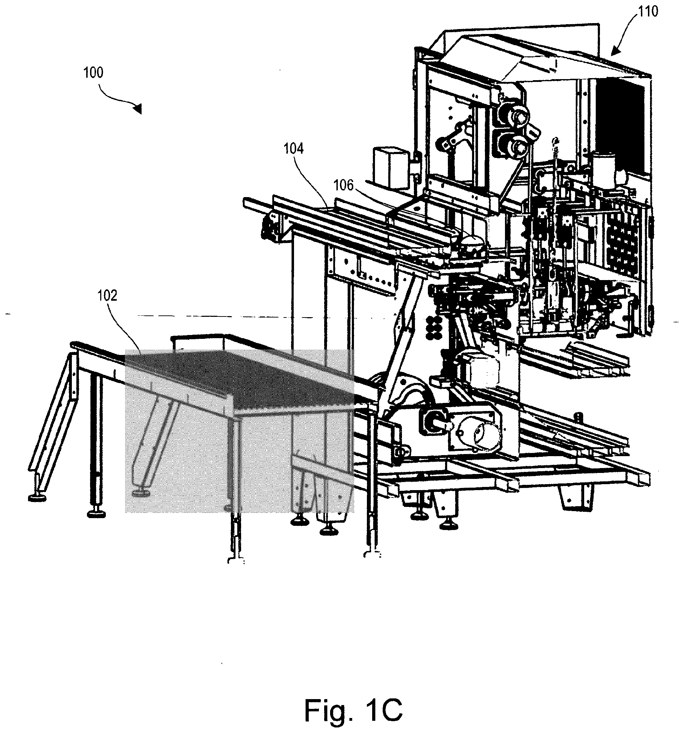

FIGs. 1A-1C depict various views of a system 100 for processing produce. The system 100 may includes an elevated accessway 102, allowing for an operator to position themselves relative to a belt 104 on which unprocessed (i.e., unpeeled) produce items 106 may be provided to the operator. The operator, while standing on the elevated accessway 102 may grab produce items 106 from the belt 104 and load them into the peeling apparatus 110. As will be further detailed herein, the peeling apparatus 110 may include various subassemblies and components configured to peel, puncture, slice, or otherwise process the produce items 106.

As will be further described, the initial step of loading the produce items 106 may include having the operator place the produce items 106 onto one or more feeders of the system 100, with the feeders being configured to then transfer the produce items 106 further into the peeling apparatus 110. Compared to a system where an operator risks directly placing the produce items 106 into a processing area, this arrangement may help to ensure that the operator is safely distanced from any cutting or rotating elements of the system 100. Once the produce items have been processed (i.e., peeled), the product produce items may then exit the peeling apparatus 110 from one or more product belts 110.

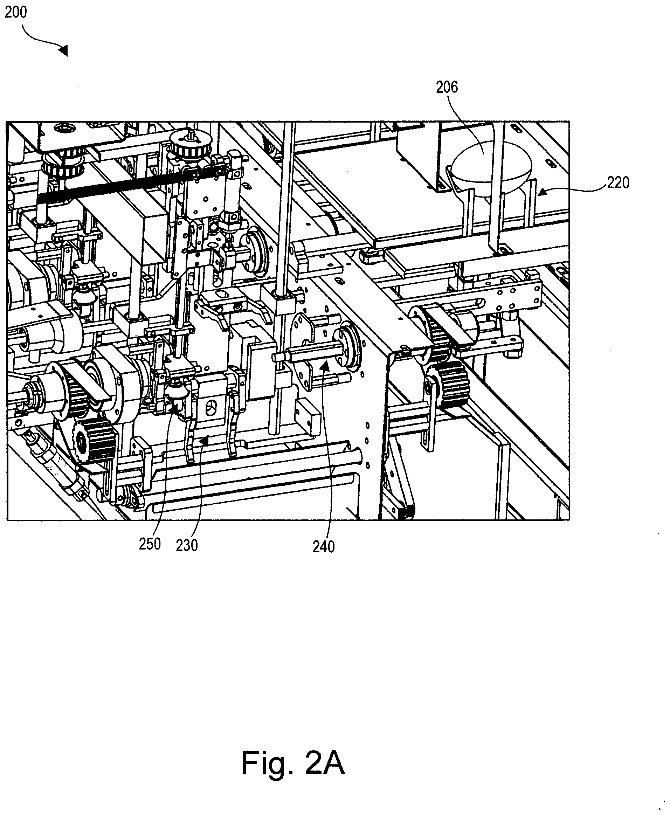

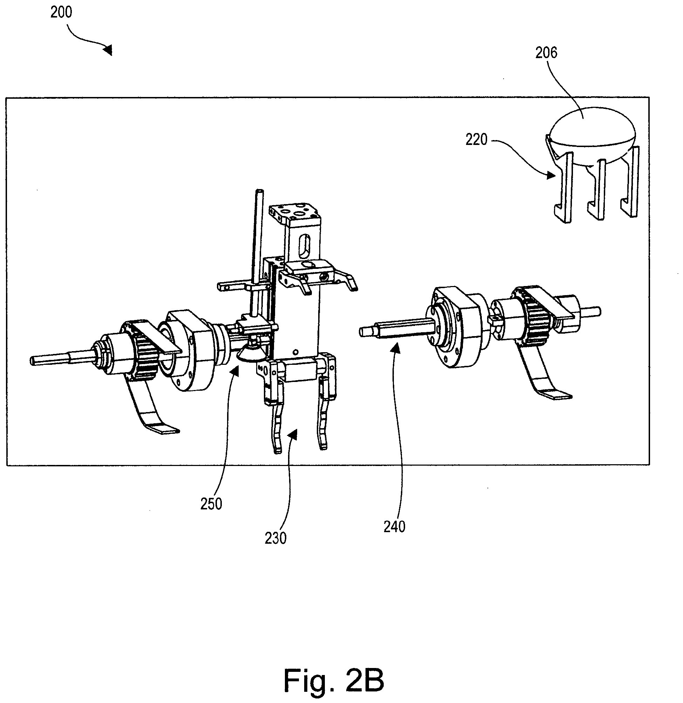

FIGs. 2A-2B depict cutout views of various parts of internal subassemblies in a system for processing produce, such as the system depicted in FIGs. 1A-1C. Generally, a loading subassembly 220 may transfer the produce items 206 from the loading area near the operator into close proximity with the positioning subassembly 230. The positioning subassembly 230 may then secure the produce items 206 and transfer them into a position (i.e., a coupling area) where they may be coupled to a rotating drive subassembly 240. The rotating drive subassembly 240 may then rotate the produce items 206 as the peeling subassembly 250 contacts the produce items 206 along their length, thereby peeling each of the produce items 206. While the peeling is occurring, the positioning subassembly 230 and the loading subassembly 220 may be configured to return to their initial positions and accept the next batch of produce items, such that a high volume of produce items may be rapidly peeled.

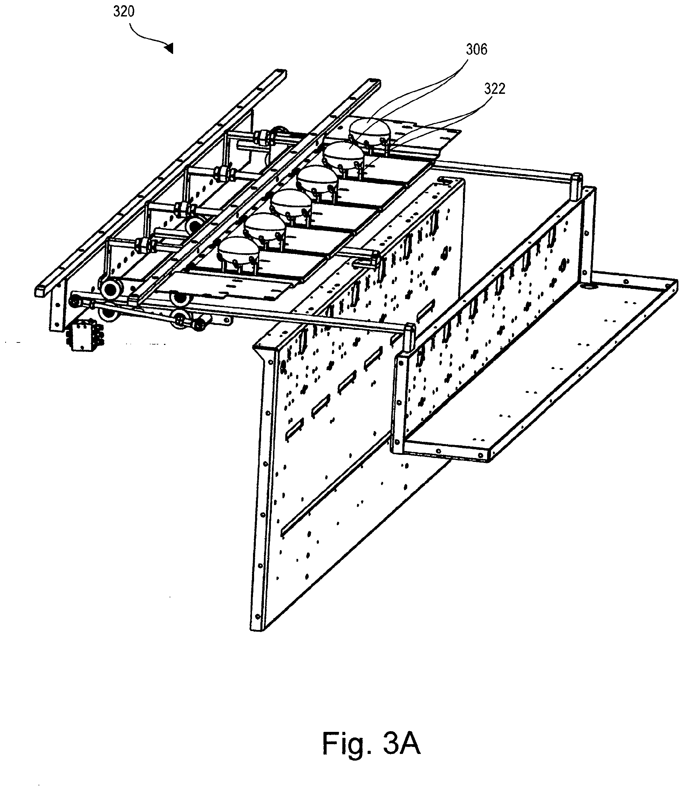

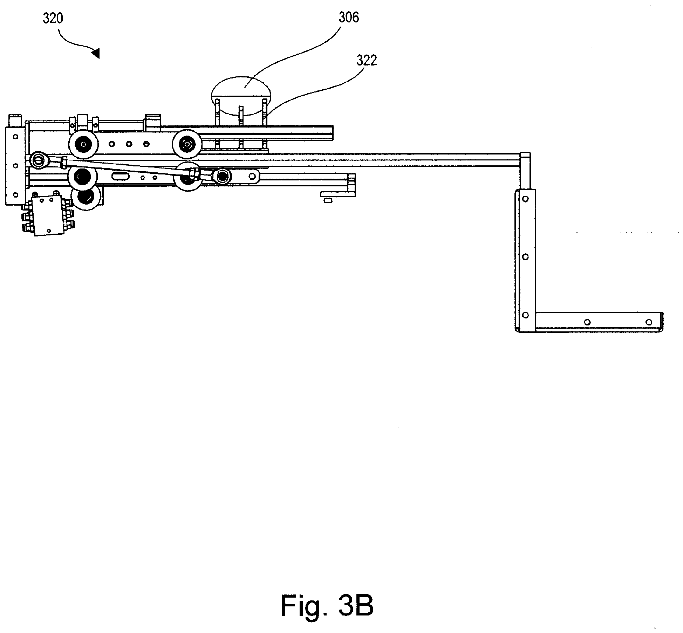

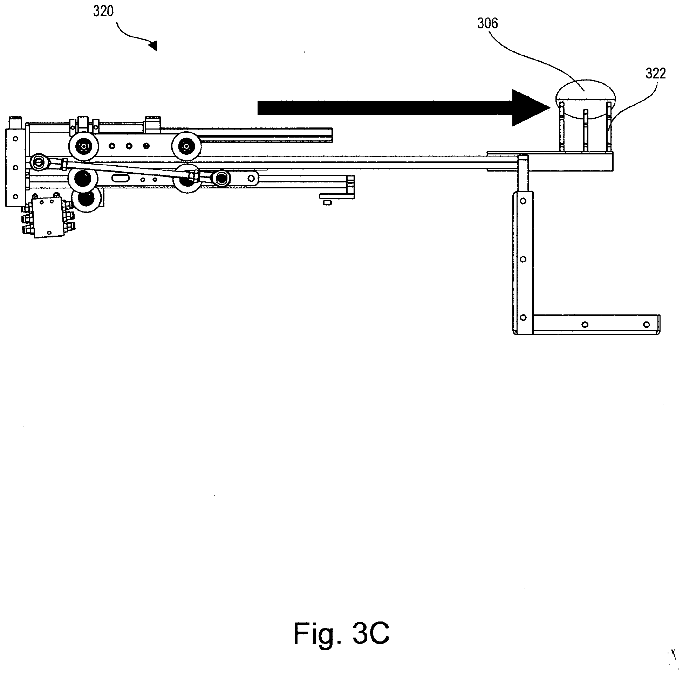

FIGs. 3A-3C depict various views of a loading subassembly 320 for use in a system for processing produce, such as the system depicted in FIGs. 1A-1C. As shown, the loading subassembly 320 may include one or more feeders 322 on which the produce items 306 may be placed. The feeders 322 may be configured to move the produce items 306 in a lateral direction, away from the operator and toward the center of the system. For example, FIG. 3B depicts the produce items 306 in an initial loaded state, while FIG. 3C shows them having been moved into a subsequent, loaded position. In order to provide this repeated motion, the loading subassembly may rely on one or more actuators, belts, or other similar components known in the art. In the loaded position, the produce items 306 may be accessible to a positioning subassembly of the system. As shown, the feeders 322 may be configured such that the produce items 306 may be easily contacted and secured while they are positioned in the feeders 322. For instance, the feeders 322 may have one or more access regions, by which members (e.g., arms, pincers, grips) may easily contact the produce items 306 without contacting the feeders 322. The access regions, defined by arms of the feeders in 322, may specifically allow for the produce items 306 to be contacted on a top side and a bottom side (relative to gravity). The feeders 322 may be configured to have the produce items positioned with the stem facing in the lateral direction, such that the fruit is on its side in the feeders 322.

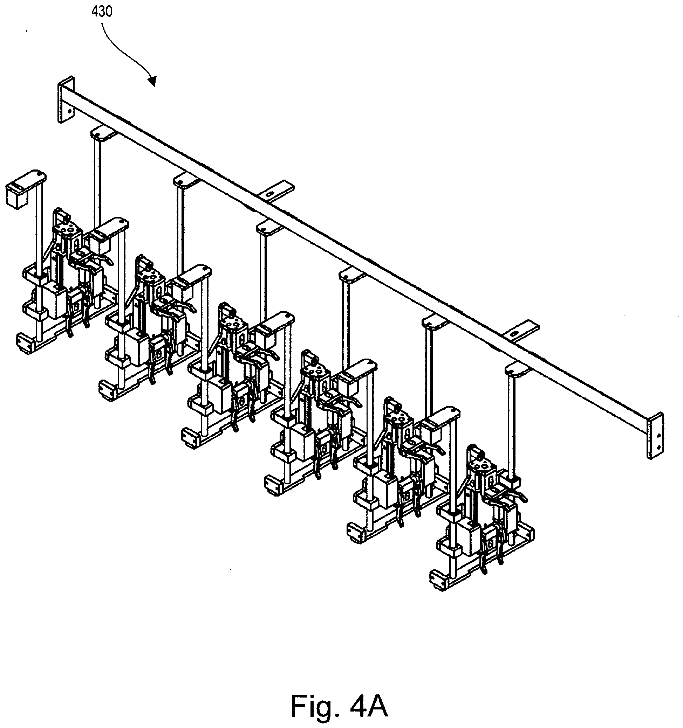

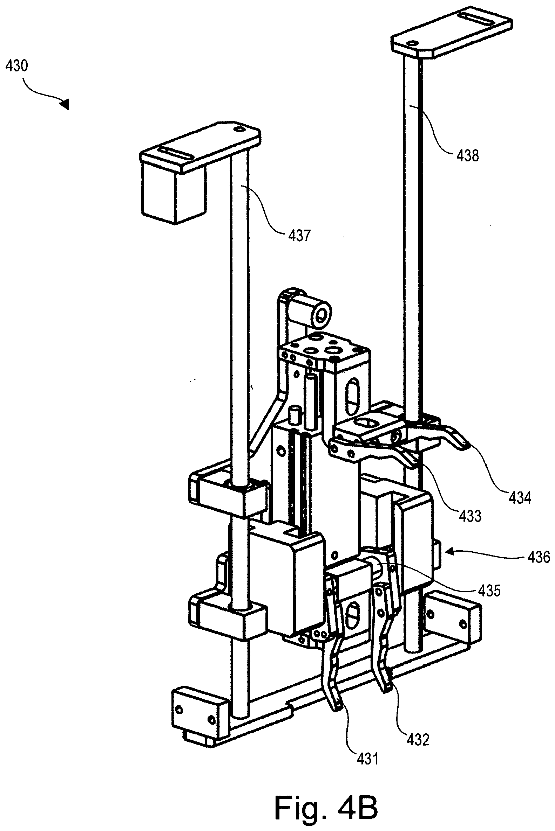

FIGs. 4A-4G depict various views of a positioning subassembly 430 for use in a system for processing produce, such as the system depicted in FIGs. 1A-1C. Generally, the positioning subassembly 430 may be configured to transfer produce items from the feeders to the coupling area of a rotating drive subassembly, where the produce items may then undergo peeling. FIG. 4B depicts an individual unit of the positioning subassembly 430 that includes a grabbing mechanism 436 having various arms, such as a first pincer 431, a second pincer 432, a third pincer 433, and a fourth pincer 434. The pincers 431, 432, 433, 434 may be configured to contact and secure a produce item, with the first and second pincers contacting a bottom section of a produce item, and the third and fourth pincers 433, 434 contacting a top section of a produce item. In particular, the pincers 431, 432, 433, 434 may be configured such that they may be secure a produce item through the access regions of a feeder, such as feeders 322 in FIGs. 3A-3C. The grabbing mechanism 436 may be configured to move in a vertical direction along rods 437, 438, transferring a produce item between a feeder and a coupling region of a rotating drive, and then returning to the feeder to secure the next produce item. Although multiple pincers 431, 432, 433, 434 are depicted in this example, it should be readily appreciated that alternative contact arms or configurations may be used to secure the produce item.

Beneficially, the depicted grabbing mechanism 436 may specifically only move in a single axial direction (i.e., vertically), which can greatly reduce the complexity of operations, reduce the size of the system, and improve processing time. In order to ensure that the grabbing mechanism 436 is able to quickly return to the feeder to begin to secure the next produce item, the first and second pincers 431, 432 may be configured rotate away from the bottom section of the produce item along an axis 435 of the grabbing mechanism 436. If the first and second pincers 431, 432 were not designed to rotate away from the produce item, the grabbing mechanism may not be able to return to the feeder without those pincers contacting either the produce item or the rotating drive subassembly to which the produce item is coupled for peeling. Accordingly, without this rotational feature in pincers 431 and 432, the positioning subassembly not be able to return to secure the next produce item until after the peeling of the first produce item is completed, unless it were configured to move in multiple axial directions. The grabbing mechanism 436 may rely on for instance, an actuator, or any known technique for providing the controlled rotation of the pincers 431, 432.

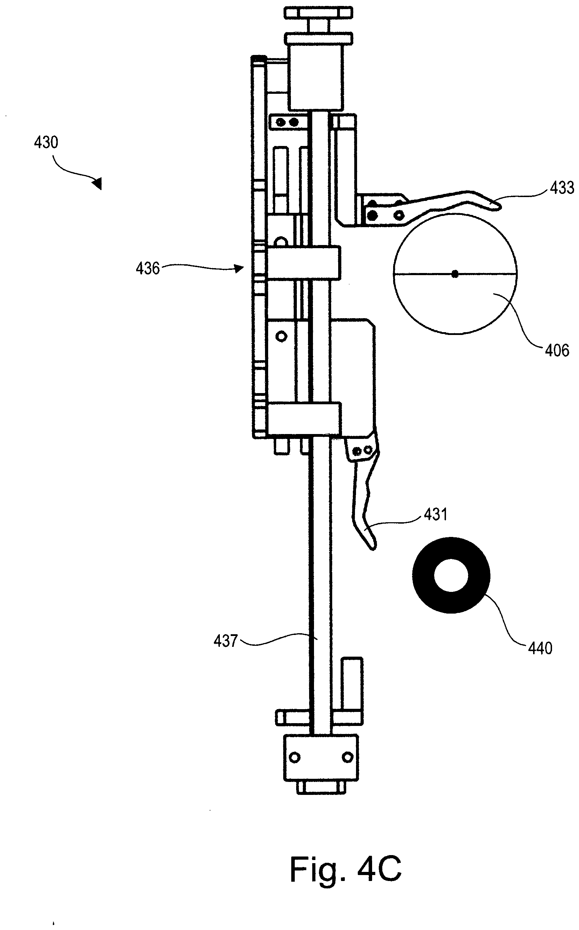

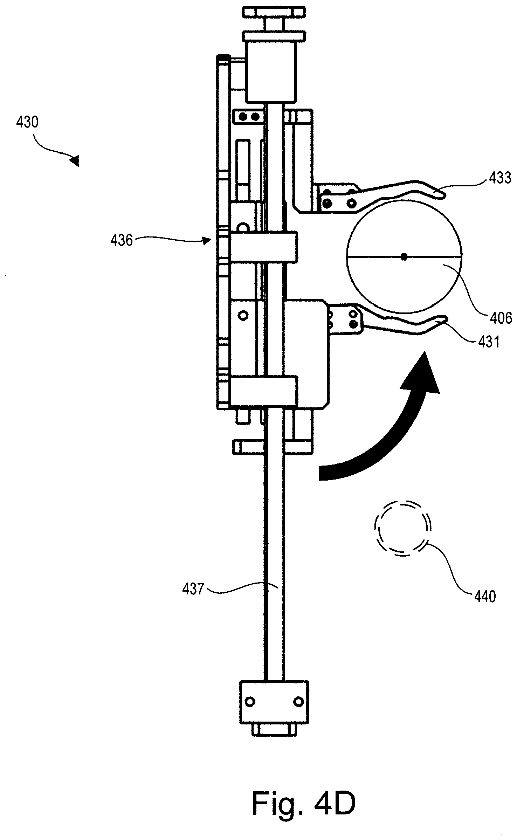

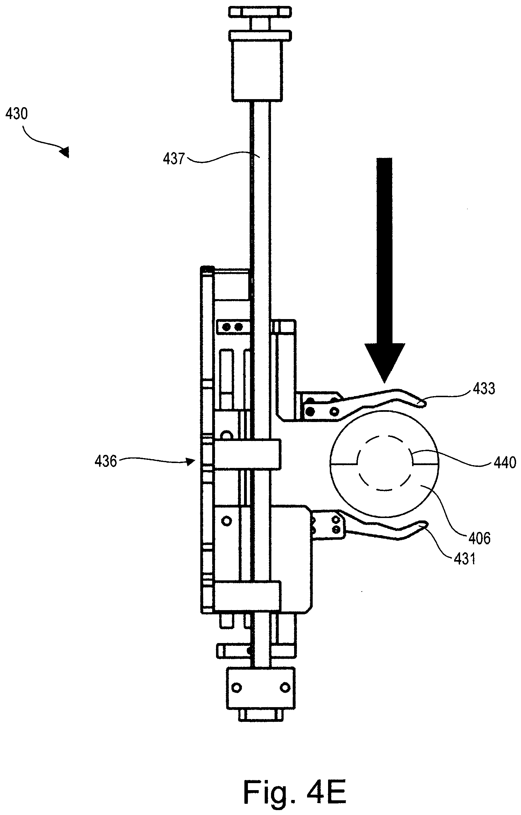

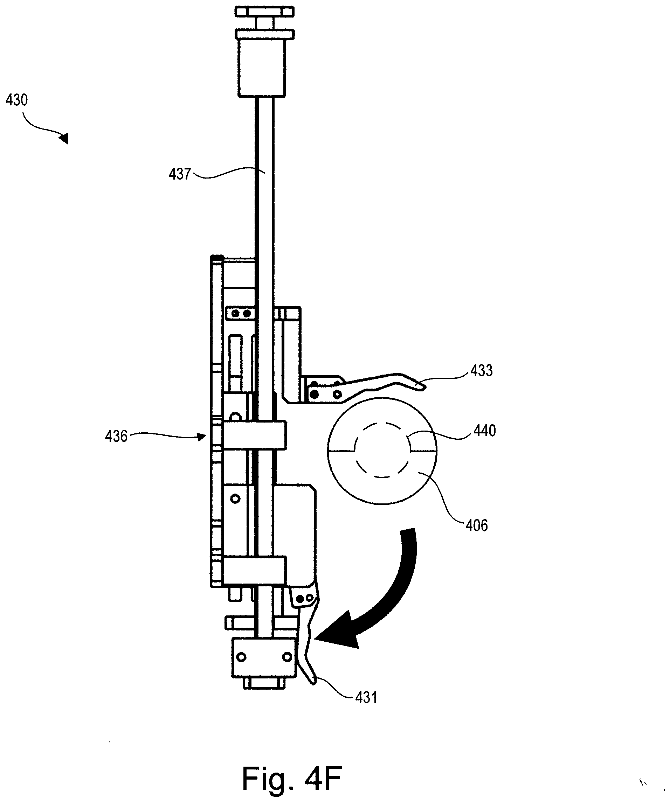

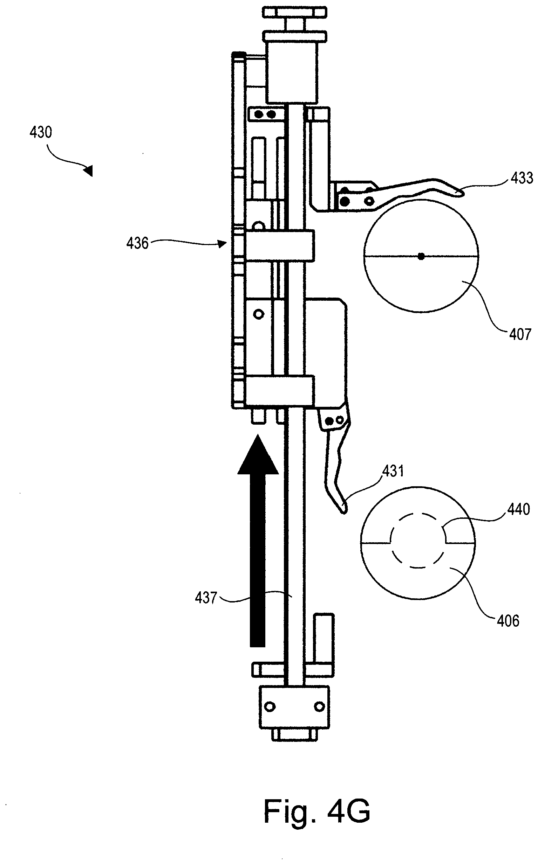

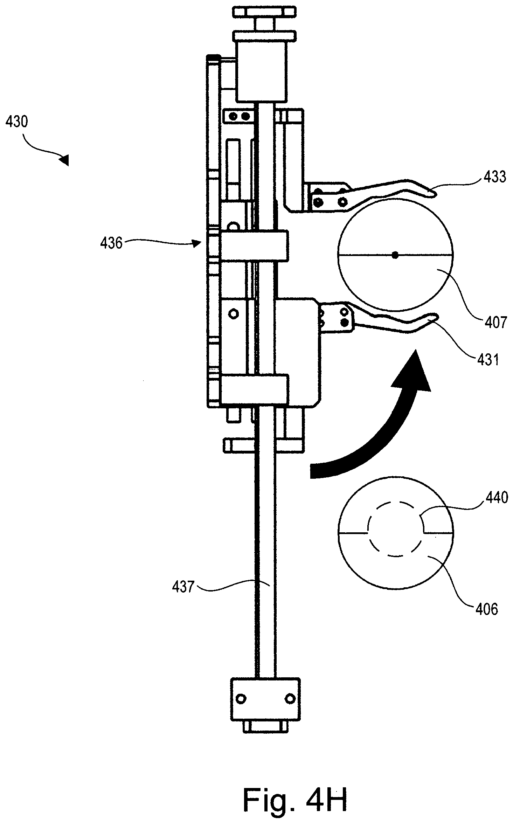

FIGs. 4C-4G depict the progression of the grabbing mechanism 436 going through a typical workflow in the positioning subassembly 430. In FIG. 4C, a produce item 406 has been placed into an initial position (e.g., by a feeder) where it may be clamped by the grabbing mechanism 436. In this depiction, the grabbing mechanism 436 is shown in a top, unclamped position. Next, in FIG. 4D, the bottom pincers 431, 432 of the grabbing mechanism 436 may rotate toward the produce item 406, thereby contacting and securing the produce item 406 between all four pincers 431, 432, 433, 434. Then, in FIG. 4E, the grabbing mechanism 436 and the produce item 406 secured thereto may slide to a bottom position, with the produce item 436 now positioned within a coupling region 440 of a rotating drive subassembly. The rotating drive subassembly may then couple to the produce item 406, holding it securely in place. In FIG. 4F, the bottom two pincers 431, 432 of the grabbing mechanism 436 may rotate away from the produce item, such that the grabbing mechanism is no longer securing the produce item 406. Next, in FIG. 4G, the grabbing mechanism 436 may slide to its original top position, while remaining in an unclamped state. The vertical position of the pincers 431, 432 may prevent the grabbing mechanism from contacting the produce item 406 as this slide occurs. In FIG. 4H, the grabbing mechanism is shown securing a second produce item 407 using the same operations described in FIG. 4D, while the produce item 406 remains coupled to the rotating drive subassembly, undergoing a rotational peeling process. Again, this arrangement permits rapid peeling of numerous produce processes using a grabbing mechanism that may substantially move in only one axial direction.

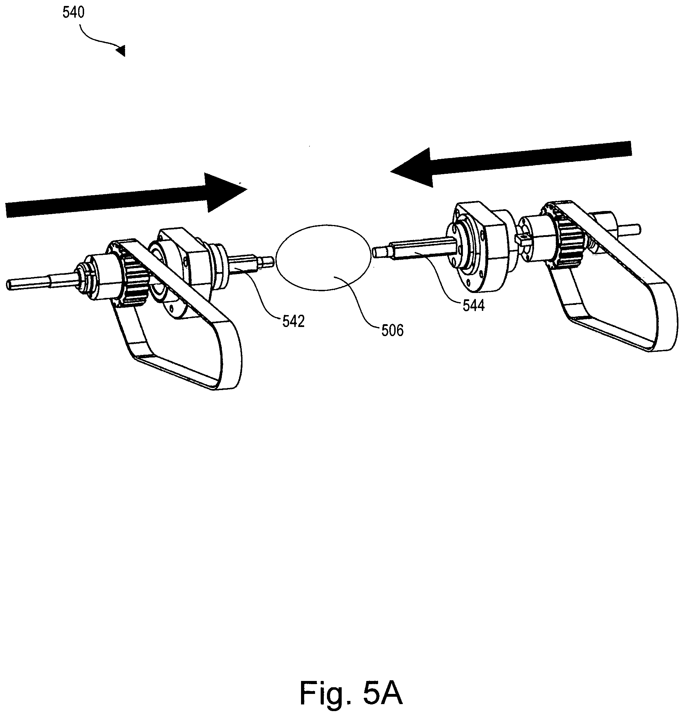

FIGs. 5A-5B depict various views of a part of a rotating drive subassembly 540 for use in a system for processing produce, such as the system depicted in FIGs. 1A-1C. As shown, the rotating drive 542 may include a first member (e.g., mandrel) 542 and a second member (e.g., mandrel) 544, one or more of which may rely on an electric motor or similar drive mechanism to produce controlled rotation. As depicted in FIG. 5A, the members 542, 544 may be configured to removably couple to a left section and a right section of the produce item 506, which may be achieved through lateral motion of each member toward the other, thereby contacting and/or puncturing the produce item. The area in between the two members in which the produce item 508 may be securely coupled by such lateral motion may be considered to be a coupling area.

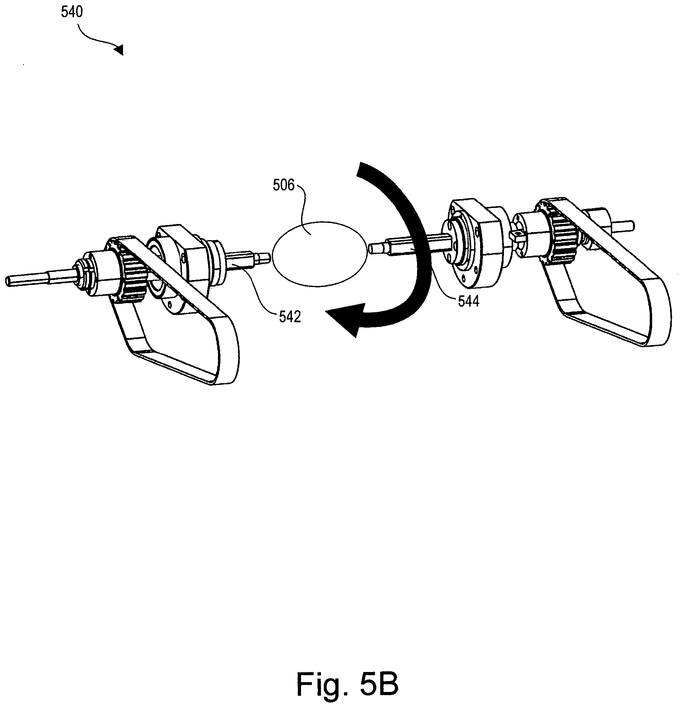

As shown in FIG. 5B, once attached, the members 542, 544 may be configured to rotate the produce item 506, and thereby provide the force for peeling the produce item 506. The precise rotational speed may be varied according to the blade used and the type of produce being peeled. Furthermore, although not depicted, it should be appreciated that various gripping ends may be connected to the members 542, 544 depending on the type and size of produce being peeled, such that the produce item may remain securely coupled during rotation and peeling.

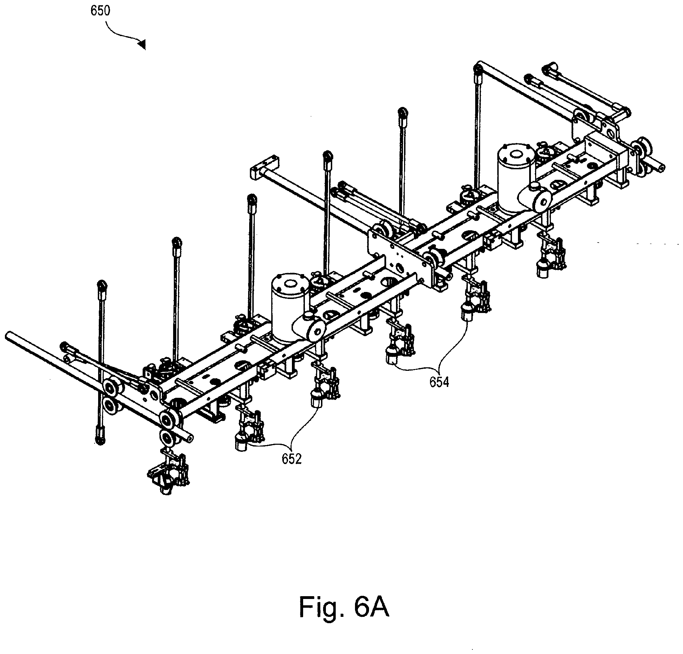

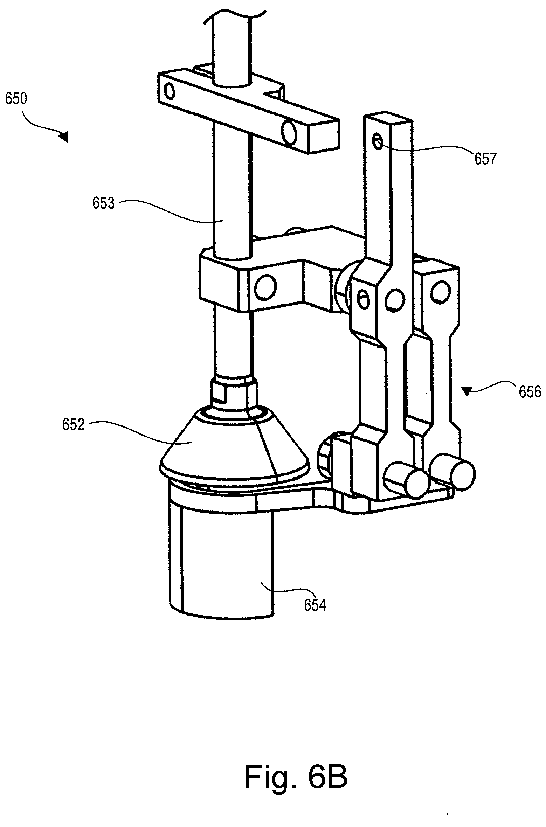

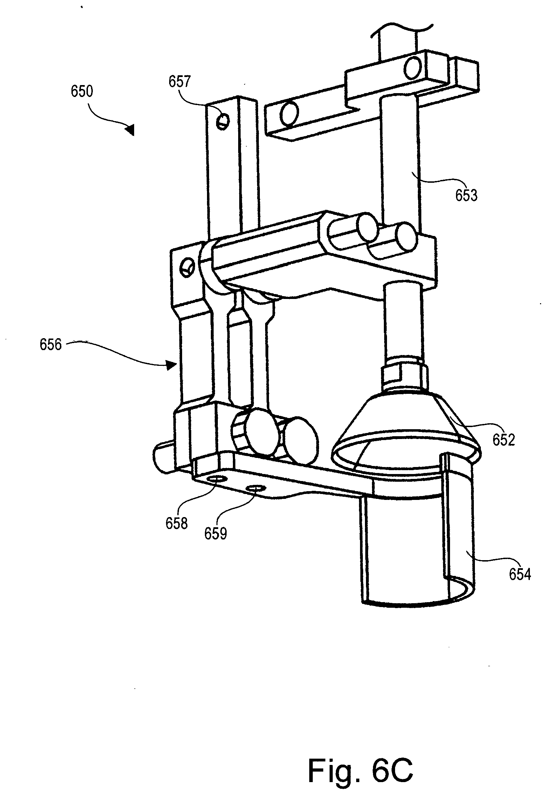

FIGs. 6A-6C depict various views of a peeling subassembly 650 for use in a system for processing produce, such as the system depicted in FIGs. 1A-1C. As shown, each part of the peeling subassembly may include a blade 652 configured to peel the produce item while the produce item is rotated by the rotating drive, as well as a blade guard 654 positioned adjacent to the blade 652. The blade guard 654 may function to control the depth at which the blade 652 penetrates the produce item, and may be configured to be set to various depths depending on the peel depth desired. The blade 652 itself may be specifically, for example, a conical blade, as depicted. Although it should be appreciated that any suitable peeling blade may be utilized. A blade rod 653 may be configured to contact the blade 652 to a produce item and to controllably move the blade 652 along the length of the produce item as it is rotated, such that the skin may be removed along the length of the produce item.

A guard positioning device 656 may be coupled to the blade rod 653 and the blade guard 654. The guard positioning device 656 may be configured to control the position of the blade guard 654 relative to the blade 652. In other words, should an operator wish to make an adjustment to the depth at which the product produce items are being peeled, an adjustment to the guard positioning device 654 may be made. As shown, the guard positioning device 656 may rely on multiple arms connected to multiple pairs of axis, which may permit the blade guard 654 to be adjusted in direction that is parralel to a cutting edge of the blade 652. This arrangement thereby maintains the orientation of the blade guard 654 with respect to the blade 652, preventing the blade guard 654 from undergoing a rotational change as its position is adjusted.

As previously described, the peeling depth may be controllably selected by modifying the guard adjustment device 656. This action may occur by adjusting a connecting piece (e.g., adjustable bolt) positioned between the guard adjustment device 656 and a component of the blade rod 653. Accordingly, the guard adjustment device 656 may include an orifice 657 to receive such a connection piece. This arrangement may allow for effectively unlimited depth settings within the range of the guard adjustment device 656, rather than relying on only a few settings (e.g., provided by holes located on the guard adjustment mechanism 654). Furthermore, by relying on the connection between the guard adjustment device 656 to control the depth, rather than by modifying how the blade guard 654 is connected to the guard adjustment device 656, the blade guard 654 may be easily removed and replaced without the depth setting without being lost. This may be beneficial when replacing a dulled blade or when swapping in a new sized blade and corresponding blade guard. In this way, the guard positioning device 656 may be arranged such that the position of the blade guard 654 relative to the blade 652 may be maintained as the blade guard 654 is removed and reattached to the guard positioning device 656. Since, the position of the guard adjustment device 656 controls the depth, the blade guard 654 may be configured to connect to the guard positioning device 656 using one or more threaded bolts placed through orifices 658, 659. The guard positioning device 656 may specifically include two matching orifices, but no additional orifices for connection. In this manner, the blade guard 654 may only be configured to connect to the guard positioning device 656 at one position.

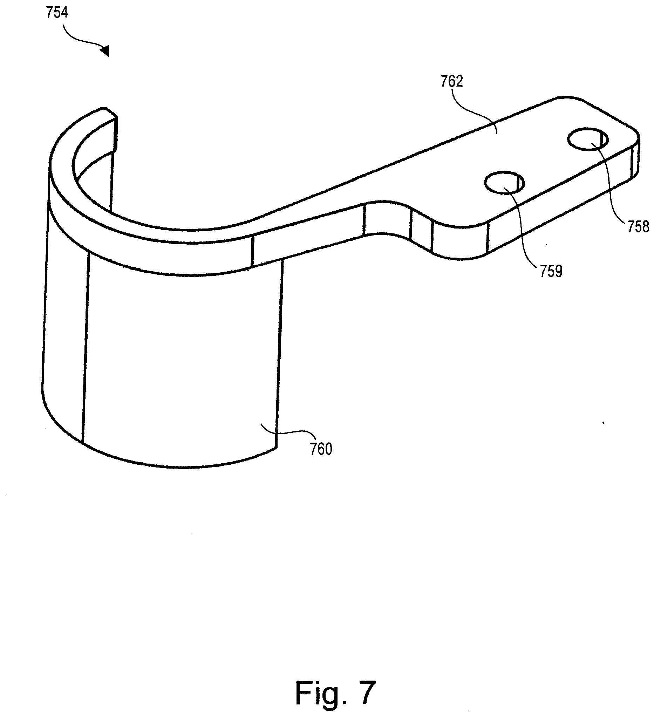

FIG. 7 depicts a blade guard 754 for use in a system for processing produce, such as the system depicted in FIGs. 1A-1C. As shown, the blade guard 754 may include a rounded surface 760 configured to contact a produce item and a connecting arm 762 attached to and configured to support the rounded surface 760. The blade guard 754 may be configured to removably attach to a guard positioning device at only a single attachment position. For instance, the connecting arm 762 may include a first aperture 758 configured to receive a first fastener and a second aperture 759 configured to receive a second fastener, with each of the apertures 758, 759 configured to align with corresponding apertures on a guard adjustment device of a peeling subassembly.

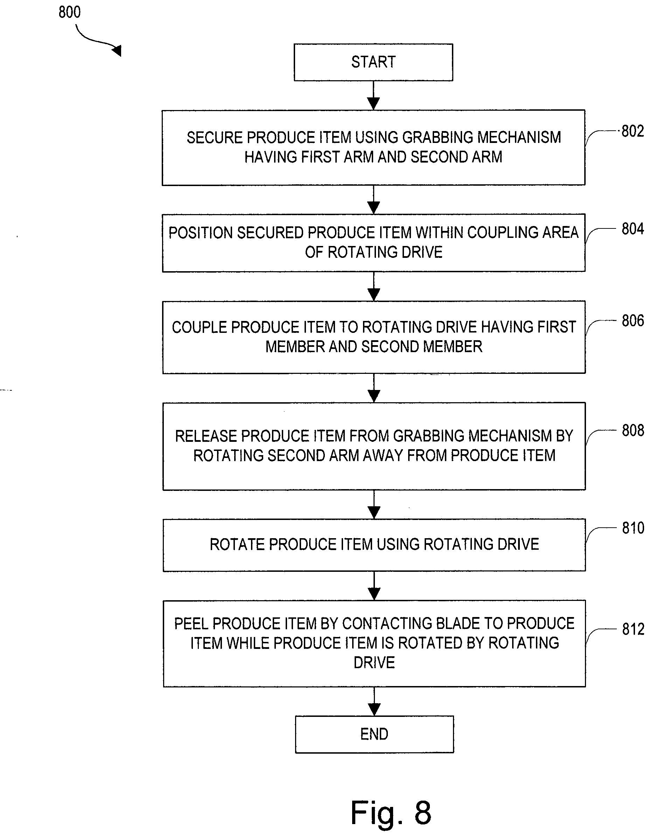

FIG. 8 depicts a flowchart of a method 800 for processing produce, consistent with the disclosure provide herein. At 802, a produce item may be secured using a grabbing mechanism having a first arm and a second arm. At 804, the secured produce item may positioned within the coupling area of a rotating drive. At 806, the produce item may be coupled to a rotating drive having a first member and second member. At 808, the produce item may be released from the grabbing mechanism by rotating the second arm away from the produce item. At 810, the produce item may be rotated using the rotating drive. At 812, the produce item may be peeled by contacting a blade to the produce item while the produce item is rotated by the rotating drive.

While the disclosure has been described in detail and with reference to specific embodiments thereof, it will be apparent to one skilled in the art that various changes and modifications can be made therein without departing from the spirit of the embodiments. Thus, it is intended that the present disclosure cover the modifications and variations of this disclosure provided they come within the scope of the appended claims and their equivalents.

## Claims

1. A system for processing produce, comprising:
a rotating drive having a first member and second member, the first member and second member configured to removably couple to a produce item within a coupling area of the rotating drive and to rotate the produce item;
a blade configured to peel the produce item while the produce item is rotated by the rotating drive; and
a grabbing mechanism configured to secure a produce item and to position the produce item within the coupling area of the rotating drive, the grabbing mechanism including:
a first arm configured to contact the produce item from a first section; and
a second arm configured to contact the produce item from a second section, wherein the second arm is further configured to rotate away from the second section of the produce item.

2. The system of claim 1, wherein the second arm is configured to rotate away from the second end of the produce item when the produce item is removably coupled to the first member and the second member.

3. The system of claims 1 or 2, wherein the grabbing mechanism
(i) is configured to move in a vertical direction in and out of the coupling area of the rotating drive;
(ii) further includes an actuator configured to rotate the second arm toward the second section of the produce item;
(iii) is configured to move in one axial direction relative to the coupling area of the rotating drive; and/or
(iv) is configured to secure the produce item from a top section and a bottom section, and wherein the members of the rotating drive are configured to removably couple to a left section and a right section of the produce item.

4. The system of any one of the preceding claims, wherein the blade is a conical blade.

5. The system of any one of the preceding claims, further comprising:
a blade guard positioned adjacent to the blade, wherein the blade guard is configured to control the depth at which the blade penetrates the produce item.

6. The system of claim 5, further comprising:
a blade rod coupled to the blade and the blade guard, the blade rod configured to position the blade to controllably contact the produce item; and
a guard positioning device coupled to the blade rod and the blade guard, the guard positioning device configured to control the position of the blade guard relative to the blade.

7. The system of claim 6, wherein the guard positioning device is configured such that the position of the blade guard relative to the blade may be maintained as the blade guard is removed and reattached to the guard positioning device.

8. The system of claim 7, wherein the blade guard is configured to connect to the blade guard positioning device using a threaded bolt.

9. The system of any one of claims 6 to 8, wherein the blade guard is configured to be adjusted in a parallel direction to a cutting edge of the blade.

10. The system of any one of the preceding claims, further comprising:
a feeder configured to move the produce item in a lateral direction, wherein the grabbing mechanism is configured to secure the produce item from the feeder.

11. A method of processing produce, the method comprising:
securing a produce item using a grabbing mechanism having a first arm and a second arm;
positioning the secured produce item within the coupling area of a rotating drive;
coupling the produce item to a rotating drive having a first member and second member;
releasing the produce item from the grabbing mechanism by rotating the second arm away from the produce item;
rotating the produce item using the rotating drive; and
peeling the produce item by contacting a blade to the produce item while the produce item is rotated by the rotating drive.

12. The method of claim 11, further comprising:
securing a second produce item using the grabbing mechanism while the produce item is being peeled by the blade, wherein optionally
the grabbing mechanism is configured to secure the second produce item by rotating the second arm toward the second produce item.

13. A system for processing produce, comprising:
a conical blade configured to peel a produce item while the produce item is rotated;
a blade guard positioned adjacent to the blade, wherein the blade guard is configured to control the depth at which the blade penetrates the produce item;
a blade rod coupled to the blade and the blade guard, the blade rod configured to position the blade to controllably contact the produce item; and
a guard positioning device coupled to the blade rod and the blade guard, the guard positioning device configured to control the position of the blade guard relative to the blade, wherein the guard positioning device is configured such that the position of the blade guard relative to the blade may be maintained as the blade guard is removed and reattached to the guard positioning device.

14. The system of claim 13, wherein the blade guard is configured
(i) to connect to the blade guard positioning device using a threaded bolt; and/or
(ii) to be adjusted in a parallel direction to a cutting edge of the blade.

15. A blade guard for use in produce processing system, comprising:
a rounded surface configured to contact a produce item;
a connecting arm attached to the rounded surface and configured to removably attach to a guard positioning device, the connecting arm including:
a first aperture configured to receive a first fastener; and
a second aperture configured to receive a second fastener.
